# EUROPEAN PATENT APPLICATION

(11) **EP 4 488 424 A1**
(43) Date of publication of application: **08.01.2025**
(21) Application number: 23461619.1
(22) Date of filing: 04.07.2023
(51) Int. Cl.: C25D 11/26

(54) **A METHOD OF SURFACE MODIFICATION OF TITANIUM BY PRODUCING TITANIUM DIOXIDE NANOTUBES AND ANNEALING**

(71) Applicant: Uniwersytet Zielonogórski, 65-417 Zielona Góra (PL)
(72) Inventor: Arkusz, Katarzyna, 64-510 Wronki (PL); Paradowska, Ewa, 65-548 Zielona Gora (PL); Nycz, Marta, 66-620 Gubin (PL)
(74) Representative: JD&P Patent Attorneys Joanna Dargiewicz & Partners

(57) **Abstract**

The object of the invention is a method of surface modification of titanium by forming a layer of titanium dioxide nanotubes (TNT) on a titanium substrate using anodisation in a two-electrode system, where the working electrode is a titanium foil and the reference electrode is a platinum foil and the electrolyte is an aqueous solution containing 85 to 90 wt% ethylene glycol and 0.65 wt% NH₄ F, the method advantageously including a thermal modification step for 2 hours at 350-600 °C in an atmosphere of argon, either nitrogen or air.

## Description

The object of the present invention is a method of surface modification of titanium by producing titanium dioxide nanotubes (TNT) with different morphologies and applying thermal modification by annealing at different temperatures and atmospheres. The method makes it possible to adjust the wettability, surface free energy and stationary potential of titanium.

Chinese patent application CN102297881A discloses a method for manufacturing a hydrogen sensor based on titanium dioxide nanotubes (TiO₂), which includes the steps of: pretreatment on high purity titanium sheets; first anodic oxidation on titanium sheets; second anodic oxidation on titanium sheets; annealing on titanium sheets with TiO₂ nanotubes formed on them, after the second anodic oxidation; deposition of Pt and Pd precious metals on TiO₂ nanotubes subjected to high temperature annealing to obtain a hydrogen sensor.

Chinese patent application CN108417411A describes a method of obtaining a supercapacitor involving the steps of preparing a titanium dioxide nanotube array on a titanium sheet using anodising, depositing a solid electrolyte on the surface of the titanium dioxide nanotube array and depositing a transition metal oxide on the solid electrolyte.

Research publication: Yu Sun et al, Effect of heat treatment on surface hydrophilicity-retaining ability of titanium dioxide nanotubes, Applied Surface Science 440 (2018) 440-447 describes an analysis of the effect of different annealing temperatures and atmospheres on the surface wettability properties of anodised titanium nanotubes.

Scientific publication: Guohua Liu et al, Surface wettability of TiO2 nanotube arrays prepared by electrochemical anodisation, Applied Surface Science 388 (2016) 313-320 relates to wettability studies of TiO₂ nanotube arrays prepared by electrochemical anodisation.

Documents from the state of the art are known indicating a correlation between thermal modification of the surface of titanium dioxide nanotubes and its wettability, but no method of modification as in the object of the invention is disclosed. None of the documents from the state of the art disclose a method of adjusting the wettability, surface free energy and stationary potential of titanium by modification with titanium dioxide nanotubes and thermal modification as in the object of the invention.

Thus, the aim of the present invention was to develop a means of modifying the surface of titanium enabling the control of its wettability, surface free energy and stationary potential.

This objective is achieved by the object of the invention, which is a method of surface modification of titanium by producing a layer of titanium dioxide nanotubes (TNT) on a titanium substrate using anodisation in a two-electrode system, where the working electrode is a titanium film and the reference electrode is a platinum film, comprising the steps wherein:
- the titanium foil is cleaned in acetone and distilled water in an ultrasonic cleaner and then dried in a stream of nitrogen;
- the titanium dioxide nanotubes with diameters of 25 to 100 nm and heights of 100 to 1,000 nm are produced by modifying titanium by anodising in an aqueous solution containing 85 to 90 wt% ethylene glycol and 0.65 wt% NH₄F, applying a potential of 10 to 40 V for 600 to 3750 s.

Advantageously, the method according to the invention then comprises a step of thermal modification for 2 hours at 350-600°C in an atmosphere of argon, either nitrogen or air.

Advantageously, titanium foil with a purity of 99.70% is used.

Advantageously, platinum foil of 99.95% purity is used.

Advantageously, the titanium foil is cleaned in acetone and distilled water for 10 minutes each, respectively, in a 300 W ultrasonic cleaner.

Also an object of the invention is a method of imparting highly hydrophilic properties to the titanium surface with a wetting angle (WCA) of 5 to 35° as defined above, wherein titanium dioxide nanotubes with diameters of 25 to 75 nm and heights of 100 to 1000 nm are produced by modifying titanium by anodising in an aqueous solution containing 85 to 90 wt% ethylene glycol and 0.65 wt% NH₄F, applying a potential of 10 to 40 V for 600 to 3750 s.

Also an object of the invention is a method of imparting medium hydrophilic properties to the titanium surface with a wetting angle (WCA) of 35 to 75° as defined above, wherein titanium dioxide nanotubes of 50 ± 5 nm in diameter and 1000 ± 100 nm in height are produced by modifying the titanium by anodising in an aqueous solution containing 85 wt% ethylene glycol and 0.65 wt% NH₄F at a potential of 17 V for 3750 s and undergoing further thermal modification for 2 hours at 350 to 450_{°}C in an argon atmosphere or at 500 to 600_{°}C in a nitrogen or air atmosphere.

Another object of the invention is a method of imparting weakly hydrophilic properties to the titanium surface with a wetting angle (WCA) of 75 to 90° as defined above, wherein titanium dioxide nanotubes with a diameter of 50 ± 5 nm and a height of 1000 ± 100 nm are produced by modifying the titanium by anodising in an aqueous solution containing 85 wt% ethylene glycol and 0.65 wt% at a potential of 17 V for 3750 s and undergoing further thermal modification for 2 hours at 500 to 600°C in an argon atmosphere, preferably at 550°C.

Also an object of the invention is a method for imparting hydrophobic properties to a titanium surface with a contact angle (WCA) above 90° as defined above, wherein titanium dioxide nanotubes with a diameter of 100 ± 10 nm and a height of 1000 ± 100 nm are produced by modifying the titanium by anodising in an aqueous solution containing 85 wt% ethylene glycol and 0.65 wt% NH₄F at a potential of 40 V for 1100 s.

Also an object of the invention is a method for imparting a negative surface charge to a titanium surface with an open circuit potential (OCP) of -300 to -10 mV relative to an Ag/AgCI chlorosilver electrode as defined above, wherein:
- titanium dioxide nanotubes with diameters of 25 to 100 nm and heights of 100 to 1,000 nm are produced by modifying titanium by anodising in an aqueous solution containing 85 to 90 per cent by weight ethylene glycol and 0.65 per cent by weight. NH₄F, applying a potential of 10 to 40 V for 600 to 3750 s
   or
- titanium dioxide nanotubes with a diameter of 25 ± 5 nm and a height of 1000 ± 100 nm are produced by modifying the titanium by anodising in an aqueous solution containing 90 wt% ethylene glycol and 0.65 wt% NH₄F at a potential of 10 V for 600 s and undergoing further thermal modification for 2 h at 350 to 550°C in an argon atmosphere.

A further object of the invention is a method of imparting a positive surface charge to a titanium surface with an open circuit potential (OCP) of more than 10 mV relative to an Ag/AgCI chlorosilver electrode as defined above, wherein:
- titanium dioxide nanotubes with diameters of 50 to 75 nm and heights of 1,000 ± 100 nm are produced by modifying titanium by anodising in an aqueous solution containing 85-90 wt% ethylene glycol and 0.65 wt% NH₄F, applying a potential of 17 to 30 V for 900 to 3750 s and undergoing further thermal modification for 2 h at 450 to 550°C in an argon atmosphere,
   or
- titanium dioxide nanotubes with a diameter of 50 ± 5 nm and a height of 1000 ± 100 nm are produced by modifying the titanium by anodising in an aqueous solution containing 85 wt% ethylene glycol and 0.65 wt% NH₄F at a potential of 17 V for 3750 s and undergoing further thermal modification for 2 hours at 550°C in an atmosphere of either argon or nitrogen or air.

The object of the invention is shown in the figures, where:

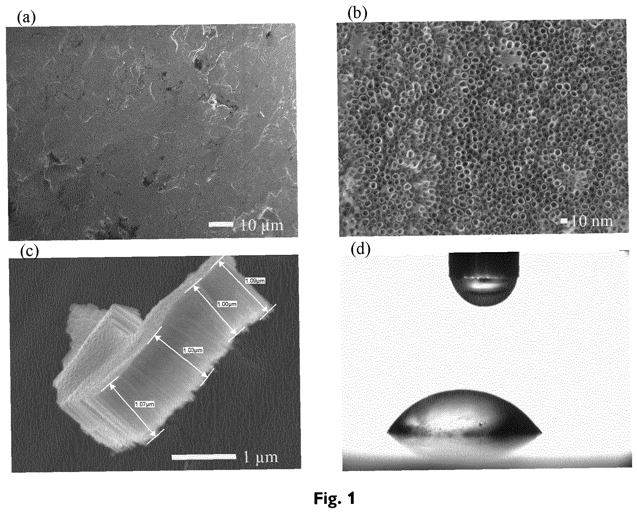

Fig. 1 shows SEM images of the surface of pure titanium - Ti (a), coated with TiO₂ nanotubes - TNT with a diameter of 75 ± 5 nm and a height of 1000 ± 100 nm top view (b) and side view (c), as well as an example of a wetting angle measurement (d).

The invention relates to a method of surface modification of titanium by producing titanium dioxide nanotubes (TNT) with different morphologies and applying thermal modification by annealing at different temperatures and atmospheres. The developed method of surface modification of titanium allows control over a wide range of physical and chemical properties of titanium, such as surface wettability and stationary potential measured in artificial plasma solution. The layer produced is made up of of homogeneous, vertically aligned TiO₂ nanotubes on a titanium substrate with a height of 100 ÷ 1000 nm and a circular base with a diameter in the range of 25 ÷ 100 nm.

This layer is formed by anodising in an ethylene glycol solution with the addition of ammonium fluoride. In the following, the description of the invention demonstrates the relationship between the morphological parameters of TNT, temperature and annealing atmosphere, and the wettability, surface free energy and stationary potential of the nanotubular layer formed on the titanium substrate.

The TiO₂ nanotube layer is the subject of research by many scientists to determine the physicochemical properties and potential application mainly in medicine. The uniqueness of the developed method of fabrication and thermal modification lies in its adjustability:
- wettability - from hydrophobic to superhydrophilic surfaces, and
- stationary potential in artificial plasma solution - from strongly negative values to positive values over a very wide range.

These properties allow TNT to be used in a variety of industries, particularly in biomedical engineering as an osteosynthesis-regulating layer, as an antibacterial layer or coating for urological catheters.

In order to produce a layer of titanium dioxide nanotubes (TNT) on a titanium substrate, anodisation was performed in a two-electrode system, where the working electrode was a titanium foil with a purity of 99.70% and a thickness of 0.25 mm, and the reference electrode was a platinum foil with a size of 20 x 15 x 0.25 mm and a purity of 99.95%.

The titanium foil was cut into 15 (height) x 5 (width) x 0.25 (thickness) mm samples and then subjected to cleaning in acetone and distilled water for 10 minutes each, respectively, in a 300 W ultrasonic cleaner.

After cleaning, the titanium substrates were dried in a stream of nitrogen.

The anodising time and voltage, as well as the concentration of ethylene glycol, were determined as parameters controlling the value of the diameter and height of the TNTs produced by anodising. The samples were then thermally modified by annealing for two hours at different atmospheres and temperatures.

A field emission scanning microscope (FESEM, JEOL JSM-7600F) was used to study the morphology of the TNTs produced, with diameter and height values determined.

Wettability tests were conducted using a Klimatest PG-3 goniometer.

Open-circuit potential (open-circuit potential, OCP) measurements were carried out in 0.01 M buffered saline in a three-electrode system with a chlorosilver electrode as the reference electrode.
1) **The wettability** of titanium was regulated using the following conditions:
   (a) Strong surface hydrophilicity (WCA 5-35°) was obtained by:
      ▪ producing TNT with diameters of 25 - 75 nm and heights of 100 - 1000 nm, modifying the titanium by anodising in an aqueous solution containing 85 - 90 wt% ethylene glycol + 0.65 wt% NH₄F, applying a potential of 10 - 30 V for 600-3750 s.
   (b) Average hydrophilicity (WCA 35-75°) was obtained by:
      ▪ producing TNT with a diameter of 50 ± 5 nm and a height of 1000 ± 100 nm by modifying the titanium by anodising in an aqueous solution containing 85 wt% ethylene glycol + 0.65 wt% NH₄F at a potential of 17 V for 3750 s and undergoing further thermal modification for 2 hours at 350 - 450_{°}C in an argon atmosphere or at 500 - 600_{°}C in nitrogen or air atmospheres.
   (c) Weak hydrophilicity (WCA 75-90°) was obtained by:
      ▪ producing TNT with a diameter of 50 ± 5 nm and a height of 1000 ± 100 nm by modifying the titanium by anodising in an aqueous solution containing 85 wt% ethylene glycol + 0.65 wt% NH₄F at a potential of 17 V for 3750 s and undergoing further thermal modification for 2 hours at 500 - 600_{°}C in an argon atmosphere, preferably at 550_{°}C.
   (d) Hydrophobicity (WCA >90°) was obtained by:
      ▪ producing TNT with a diameter of 100 ± 5 nm and a height of 1000 ± 100 nm, modifying the titanium by anodising in an aqueous solution containing 85 wt% ethylene glycol + 0.65 wt% NH₄F at a potential of 40 V for 1100 s.
**2) The surface charge** of titanium (-465 ± 5 mV) was adjusted using the following conditions:
   (a) A negative surface charge (OCP -300 to -10 mV vs. Ag/AgCI) was obtained by:
      ▪ producing TNT with diameters of 25 - 100 nm and heights of 100 - 1000 nm by modifying titanium by anodising in an aqueous solution containing 85 - 90 wt% ethylene glycol + 0.65 wt% NH₄F, applying a potential of 10 - 40 V for a time of 600 - 3750 s
         or
      ▪ producing TNT with a diameter of 25 ± 5 nm and a height of 1000 ± 100 nm, modifying the titanium by anodising in a solution of 90% ethylene glycol + 0.65 wt% NH₄F at a potential of 10 V for 600 s and undergoing further thermal modification for 2 h at 350 - 550°C in an argon atmosphere.
   (b) A positive surface charge (OCP>10 mV) was obtained by:
      ▪ producing TNT with diameters of 50 - 75 nm and a height of 1000 nm by modifying titanium by anodising in an aqueous solution containing 85 - 90% by weight ethylene glycol + 0.65% by weight. NH₄F, applying a potential of 17 - 30 V for 900 - 3750 s and undergoing further thermal modification for 2 hours at 450 - 550°C in an argon atmosphere,
         or
      ▪ producing TNT with a diameter of 50 ± 5 nm and a height of 1000 ± 100 nm by modifying the titanium by anodising in an aqueous solution containing 85 wt% ethylene glycol + 0.65 wt% NH NH₄F at a potential of 17 V for 3750 s and undergoing further thermal modification for 2 hours at 550°C in argon, nitrogen or air atmospheres.

**Table 1. Examples of chemical and thermal modification conditions for titanium to regulate surface wettability**

| **Forming conditions** | **WCA [°]** |
|---|---|
| Pure titanium | 56 ± 1 |

| strong hydrophilicity (WCA 5-35°) | |
|---|---|
| TNT manufactured in 85% ethylene glycol + 0.6 wt% NH₄F, voltage: 17 V, time: 3750 s | <1 |
| Thermal modification: annealing for 2 h at 450°C in an argon atmosphere | |
| TNT manufactured in 90% ethylene glycol + 0.6% by weight. NH₄F, voltage: 10 V, time: 600 s | 15 ± 4 |
| TNT manufactured in 85% ethylene glycol + 0.6 wt% NH₄F, voltage: 17 V, time: 3750 s | 20 ± 2 |
| TNT manufactured in 85% ethylene glycol + 0.6 wt% NH₄F, voltage: 17 V, time: 3750 s | 20 ± 2 |
| Thermal modification: annealing for 2 h at 550°C in a nitrogen atmosphere | |
| TNT manufactured in 90% ethylene glycol + 0.6 wt% NH₄F, voltage: 30 V, time: 900 s | 24 ± 3 |

| medium hydrophilicity (WCA 35-75°) | |
|---|---|
| TNT manufactured in 85% ethylene glycol + 0.6 wt% NH₄F, voltage: 17 V, time: 3750 s | 35 ± 3 |
| Thermal modification: annealing for 2 h at 550°C in an air atmosphere | |
| TNT manufactured in 85% ethylene glycol + 0.6 wt% NH₄F, voltage: 17 V, time: 3750 s | 35 ± 5 |
| Thermal modification: annealing for 2 h at 350°C in argon atmosphere | |
| TNT manufactured in 85% ethylene glycol + 0.6 wt% NH₄F, voltage: 17 V, time: 3750 s | 65 ± 5 |
| Thermal modification: annealing for 2 h at 450°C in an argon atmosphere | |

| poor hydrophilicity (WCA 75-90°) | |
|---|---|
| TNT manufactured in 85% ethylene glycol + 0.6 wt% NH₄F, voltage: 17 V, time: 3750 s | 80 ± 5 |
| Thermal modification: annealing for 2 h at 550°C in an argon atmosphere | |

| Hydrophobicity (WCA >90°) | |
|---|---|
| TNT manufactured in 90% ethylene glycol + 0.6 wt% NH₄F, voltage: 40 V, time: 1100 s | >90 |

**Table 2. Examples of chemical and thermal modification conditions of titanium allowing the regulation of the stationary potential in artificial plasma solution**

| **Forming conditions** | **OCP [mV vs. Ag/AgCl]** |
|---|---|
| Pure titanium | -465 ± 5 |

| negative surface charge (OCP -300 to -10 mV vs. Ag/AgCl) | |
|---|---|
| TNT manufactured in 85% ethylene glycol + 0.6 wt% NH₄F, voltage: 17 V, time: 3750 s | -282 ± 30 |
| TNT manufactured in 90% ethylene glycol + 0.6% by weight. NH₄F, voltage: 10 V, time: 600 s | -233 ± 30 |
| TNT manufactured in 85% ethylene glycol + 0.6 wt% NH₄F, voltage: 17 V, time: 3750 s | -205 ± 10 |
| TNT manufactured in 90% ethylene glycol + 0.6 wt% NH₄F, voltage: 30 V, time: 900 s | -178 ± 40 |
| TNT manufactured in 90% ethylene glycol + 0.6 wt% NH₄F, voltage: 40 V, time: 1100 s | -149 ± 25 |
| TNT manufactured in 85% ethylene glycol + 0.6 wt% NH₄F, voltage: 17 V, time: 3750 s | -115 ± 15 |
| Thermal modification: annealing for 2 h at 350°C in argon atmosphere | |
| TNT manufactured in 85% ethylene glycol + 0.6% by weight. NH₄F, voltage: 4 V, time: 7200 s | -71 ± 10 |
| TNT manufactured in 90% ethylene glycol + 0.6 wt% NH₄F, voltage: 10 V, time: 600 s | -70 ± 1 |
| Thermal modification: annealing for 2 h at 450°C in an argon atmosphere | |
| TNT manufactured in 85% ethylene glycol + 0.6 wt% NH₄F, voltage: 17 V, time: 3750 s | -55 ± 10 |
| Thermal modification: annealing for 2 h at 550°C in an air atmosphere | |

| positive surface charge (OCP>0 mV) | |
|---|---|
| TNT manufactured in 85% ethylene glycol + 0.6 wt% NH₄F, voltage: 17 V, time: 3750 s | 35 ± 15 |
| Thermal modification: annealing for 2 h at 450°C in an argon atmosphere | |
| TNT manufactured in 85% ethylene glycol + 0.6 wt% NH₄F, voltage: 17 V, time: 3750 s | 40 ± 5 |
| Thermal modification: annealing for 2 h at 550°C in a nitrogen atmosphere | |
| TNT manufactured in 85% ethylene glycol + 0.6 wt% NH₄F, voltage: 17 V, time: 3750 s | 55 ± 5 |
| Thermal modification: annealing for 2h at 550°C in an argon atmosphere | |
| TNT manufactured in 85% ethylene glycol + 0.6 wt% NH₄F, voltage: 17 V, time: 3750 s | 65 ± 5 |
| Thermal modification: annealing for 2 h at 450°C in an argon atmosphere | |
| TNT manufactured in 90% ethylene glycol + 0.6 wt% NH₄F, voltage: 30 V, time: 900 s | 103 ± 20 |
| Thermal modification: annealing for 2 h at 450°C in an argon atmosphere | |

## Claims

1. A method of surface modification of titanium by forming a layer of titanium dioxide nanotubes (TNT) on a titanium substrate using anodization in a two-electrode system, wherein the working electrode is a titanium film and the reference electrode is a platinum film, comprising the steps of:
- the titanium foil is cleaned in acetone and distilled water in an ultrasonic cleaner and then dried in a stream of nitrogen;
- the titanium dioxide nanotubes with diameters of 25 to 100 nm and heights of 100 to 1,000 nm are produced by modifying titanium by anodising in an aqueous solution containing 85 to 90 wt% ethylene glycol and 0.65 wt% NH₄F, applying a potential of 10 to 40 V for 600 to 3750 s.

2. The method according to claim 1, which further comprises a step of thermal modification for 2 hours at 350-600 °C in an atmosphere of argon, either nitrogen or air.

3. The method according to claim 1 or 2, wherein a titanium foil having a purity of 99.70% is used.

4. The method according to claim 1 or 2 or 3, wherein a platinum film having a purity of 99.95% is used.

5. The method according to any of the claims 1-4, wherein the titanium foil is cleaned in acetone and distilled water for 10 minutes each, respectively, in an ultrasonic cleaner of 300 W.

6. A method of imparting highly hydrophilic properties to the surface of titanium with a wetting angle (WCA) of 5 to 35° as defined in any of the claims 1-5, wherein titanium dioxide nanotubes with diameters of 25 to 75 nm and heights of 100 to 1000 nm are produced by modifying the titanium by anodising in an aqueous solution containing 85 to 90 wt% ethylene glycol and 0.65 wt% NH₄F, applying a potential of 10 to 30 V for 600 to 3750 s.

7. A method of imparting medium hydrophilic properties to a titanium surface with a wetting angle (WCA) of 35 to 75° as defined in any of the claims 1-5, wherein titanium dioxide nanotubes with a diameter of 50 ± 5 nm and a height of 1000 ± 100 nm are produced by modifying the titanium by anodising in an aqueous solution containing 85 wt% ethylene glycol and 0.65 wt% NH₄F at a potential of 17 V for 3750 s and undergoing further thermal modification for 2 hours at 350 to 450_{°}C in an argon atmosphere or at 500 to 600_{°}C in a nitrogen or air atmosphere.

8. A method of imparting weakly hydrophilic properties to the surface of titanium with a wetting angle (WCA) of 75 to 90° as defined in any of the claims 1-5, wherein titanium dioxide nanotubes with a diameter of 50 ± 5 nm and a height of 1000 ± 100 nm are produced by modifying the titanium by anodising in an aqueous solution containing 85 wt% ethylene glycol and 0.65 wt% NH₄F at a potential of 17 V for 3750 s and undergoing further thermal modification for 2 hours at 500 to 600_{°}C in an argon atmosphere, preferably at 550_{°}C.

9. A method of imparting hydrophobic properties to the surface of titanium with a wetting angle (WCA) greater than 90° as defined in any of the claims. 1-5, wherein titanium dioxide nanotubes with a diameter of 100 ± 10 nm and a height of 1000 ± 100 nm are produced by modifying the titanium by anodising in an aqueous solution containing 85 wt% ethylene glycol and 0.65 wt% NH₄F at a potential of 40 V for 1100 s.

10. A method of imparting a negative surface charge to a titanium surface with an open circuit potential (OCP) of -300 to -10 mV relative to an Ag/AgCI chlorosilver electrode as defined in any of claims 1-5, wherein:
- titanium dioxide nanotubes with diameters of 25 to 100 nm and heights of 100 to 1,000 nm are produced by modifying titanium by anodising in an aqueous solution containing 85 to 90 per cent by weight ethylene glycol and 0.65 per cent by weight. NH₄F, applying a potential of 10 to 40 V for 600 to 3750 s
or
- titanium dioxide nanotubes with a diameter of 25 ± 5 nm and a height of 1,000 ± 100 nm are produced by modifying titanium by anodising in an aqueous solution containing 90 wt% ethylene glycol and 0.65 wt% NH₄F at a potential of 10 V for 600 s and undergoing further thermal modification for 2 h at 350 to 550°C in an argon atmosphere.

11. A method of imparting a positive surface charge to a titanium surface with an open circuit potential (OCP) of greater than 10 mV relative to an Ag/AgCI chlorosilver electrode as defined in any of the claims 1-5, wherein:
- titanium dioxide nanotubes with diameters of 50 to 75 nm and heights of 1,000 ± 100 nm are produced by modifying titanium by anodising in an aqueous solution containing 85-90 wt% ethylene glycol and 0.65 wt% NH₄F, applying a potential of 17 to 30 V for 900 to 3750 s and undergoing further thermal modification for 2 h at 450 to 550°C in an argon atmosphere,
or
- titanium dioxide nanotubes with a diameter of 50 ± 5 nm and a height of 1000 ± 100 nm are produced by modifying the titanium by anodising in an aqueous solution containing 85 wt% ethylene glycol and 0.65 wt% NH₄F at a potential of 17 V for 3750 s and undergoing further thermal modification for 2 hours at 550°C in an atmosphere of either argon or nitrogen or air.
